# FASCICULE DE BREVET EUROPEEN

(11) **EP 3 265 687 B1**
(45) Date de publication et mention de la délivrance du brevet: **29.04.2020**
(21) Numéro de dépôt: 16707823.7
(22) Date de dépôt: 04.03.2016
(51) Int. Cl.: F16D 55/226, F16D 65/097

(54) **FREIN A DISQUE COMPORTANT AU MOINS UN RESSORT DE RAPPEL ELASTIQUE D'UN PATIN DE FREINAGE, RESSORT DE RAPPEL ELASTIQUE, GLISSIERE DE GUIDAGE ET KIT DE REMPLACEMENT**
SCHEIBENBREMSE MIT MINDESTENS EINER ELASTISCHEN RÜCKSTELLFEDER EINES BREMSBELAGES, ELASTISCHE RÜCKSTELLFEDER FÜHRUNGSSCHIENE UND ERSATZKIT
DISC BRAKE COMPRISING AT LEAST ONE RESILIENT RETURN SPRING OF A BRAKE PAD, RESILIENT RETURN SPRING, GUIDING SLIDE AND REPLACEMENT KIT

(30) Priorité: 06.03.2015 FR 1551891
(43) Date de publication de la demande: 10.01.2018
(73) Titulaire: Foundation Brakes France, 93700 Drancy (FR)
(72) Inventeur: FOUCOIN, Alexandre, 11600 VILLEGAILHENC (FR); MONTEGU, Didier, 94420 LE PLESSIS TREVISE (FR); LABARRE, Xavier, 49250 Saint Georges du Bois (FR)
(74) Mandataire: Brevalex
(86) Numéro de dépôt international: PCT/EP2016/054695
(87) Numéro de publication internationale: WO 2016/142303

(56) Documents cités:
- EP-A1- 2 792 899
- DE-A1-102012 016 737

## Description

### DOMAINE TECHNIQUE DE L'INVENTION

L'invention se rapporte à un frein à disque de véhicule automobile.

L'invention se rapporte notamment à frein à disque dont un ressort de rappel élastique d'un patin de freinage comportant des moyens de rattrapage du jeu d'usure d'une garniture de friction du patin de freinage.

### ARRIERE PLAN TECHNIQUE DE L'INVENTION

L'invention se rapporte par exemple à un frein à disque de véhicule automobile du type décrit et représenté dans la demande de brevet français FR-A1-3.004.500 qui comporte :
- un disque de frein qui s'étend dans un plan transversal à un axe d'orientation axiale de rotation du disque ;
- un support fixe par rapport à un châssis du véhicule ;
- au moins un patin de freinage dont chacun comporte une garniture de friction dont une face transversale de friction coopère avec une piste de freinage associée du disque, le patin de freinage étant monté coulissant axialement dans le support entre une position avant active dans laquelle ladite face de friction est en appui contre la piste annulaire associée du disque, et une position arrière inactive dans laquelle ladite face de friction est espacée axialement de ladite piste annulaire associée du disque, d'un jeu déterminé de fonctionnement ;
- au moins un ressort de rappel élastique du patin de freinage vers sa position inactive, qui est par exemple interposé entre le patin de freinage et le support.

Dans un frein à disque, le coulissement des patins de freinage vers leur position active est commandé par un piston. Les deux patins de freinage pincent alors fortement le disque pour ralentir sa rotation. L'opération de freinage est ainsi une opération active.

Les patins de freinage sont repoussés vers leur position inactive par le disque en rotation. Il s'agit donc d'une opération passive.

Il arrive cependant que le disque ne repousse pas les patins de freinage avec suffisamment de force pour les écarter à distance suffisante du disque. Ceci peut par exemple se produire lorsque le coulissement des patins de freinage est de qualité insuffisante, voire grippé, ou bien si la conception crée de la "restitution".

Bien que les patins de freinage ne soient plus serrés activement contre le disque, chacune des pistes annulaires de ce dernier frotte néanmoins en permanence contre la garniture de friction portée par le patin de freinage associé. Les garnitures de friction subissent ainsi une usure non fonctionnelle prématurée.

De plus, ce frottement permanent est susceptible de provoquer un échauffement dommageable pour certains organes du frein à disque.

Ce frottement permanent provoque aussi l'apparition d'un couple résiduel qui s'oppose à la rotation du disque. Ceci augmente la consommation du véhicule, tout en diminuant les performances du véhicule.

Pour résoudre ces problèmes d'usure et d'échauffement, le document mentionné précédemment propose un frein à disque dans lequel le ressort de rappel élastique comporte des moyens de rattrapage d'un jeu d'usure de la garniture de friction du patin de freinage qui se déforment plastiquement lorsque la course du patin de freinage jusqu'à sa position active est supérieure audit jeu déterminé de fonctionnement.

A cet effet, le ressort de rappel élastique, qui est interposé entre le support fixe du frein à disque et un patin de freinage associé, comporte au moins un tronçon d'orientation axiale qui est déformable élastiquement par traction entre un état de repos et un état d'élongation maximale dont la valeur est égale au jeu déterminé de fonctionnement, le ressort comportant au moins un tronçon déformable plastiquement, sous l'effet d'un effort de traction axiale, formant lesdits moyens de rattrapage du jeu d'usure, ce tronçon déformable plastiquement étant conformé pour être allongé plastiquement lorsque la course du patin de freinage jusqu'à sa position active est supérieure au jeu déterminé de fonctionnement.

Selon le mode de réalisation proposé dans ce document, le ressort de rappel élastique comporte notamment une portion de fixation du ressort de rappel élastique sur le support fixe, et une branche rigide d'orientation générale axiale dont le tronçon d'extrémité libre est conformé pour coopérer avec le patin de freinage associé. Selon une autre conception connue, le tronçon d'extrémité libre est fixé sur le patin de freinage.

De telles conceptions aboutissent à un montage et un assemblage complexes pour assurer la coopération du ressort de rappel avec le patin de freinage, ou sa fixation sur le patin de freinage.

Ces inconvénients existent aussi lorsque le ressort de rappel ne comporte pas de tronçon déformable plastiquement.

### BREF RESUME DE L'INVENTION

Afin de remédier à cet inconvénient, l'invention propose un frein à disque caractérisé en ce qu'il comporte :
- un disque de frein qui s'étend dans un plan transversal à un axe d'orientation axiale de rotation du disque ;
- un support fixe comportant au moins deux bras opposés d'orientation générale verticale comportant chacun un logement axial à section en forme de C ouvert horizontalement en direction du bras opposé et qui est délimité par une face supérieure et par une face inférieure d'orientation générale horizontale ;
- pour chaque un bras du support fixe, une glissière qui épouse les parois du logement, qui est fixée au support fixe et qui comporte au moins une partie supérieure axiale de glissement à section en forme de C qui est reçue et verrouillée dans le logement associé, cette partie supérieure comportant une aile inférieure horizontale, une aile supérieure horizontale, et une aile verticale de fond qui relie entre elles les deux ailes inférieure et supérieure ;
- au moins un patin de freinage comportant deux oreilles latérales opposées de montage dont chacune est reçue dans un logement associé d'un bras associé avec interposition d'une dite glissière ;
   dans lequel ledit au moins un patin de freinage comporte une plaque transversale verticale qui porte une garniture de friction dont une face transversale de friction coopère avec une piste de freinage associée du disque, le patin de freinage étant monté coulissant axialement dans le support fixe entre une position avant active dans laquelle ladite face de friction est en appui contre la piste de freinage associée du disque, et une position arrière inactive dans laquelle ladite face de friction est espacée axialement de ladite piste de freinage associée du disque, d'un jeu déterminé de fonctionnement ;
- et au moins un ressort de rappel élastique du patin de freinage vers sa position inactive comportant au moins une portion de fixation du ressort de rappel élastique sur le support fixe, et comportant une branche rigide de raccordement, d'orientation axiale parallèle à la direction de coulissement du patin de freinage, et qui est reliée au patin de freinage,
caractérisé en ce que :
- la portion de fixation du ressort de rappel élastique sur le support fixe comporte une patte de fixation qui s'étend vers l'avant selon une direction axiale parallèle à la direction de coulissement du patin de freinage ;
- au moins une aile de la glissière associée à ce ressort comporte une languette de fixation qui s'étend axialement vers l'arrière ;
- la patte de fixation et la languette de fixation comportent des moyens complémentaires de liaison par coopération de formes complémentaires.

Selon d'autres caractéristiques du frein à disque :
- les moyens complémentaires de liaison par coopération de formes complémentaires de la languette de fixation et de la patte de fixation coopèrent par emboîtement élastique lors de leur assemblage ;
- la languette de fixation est une bande qui s'étend dans un plan axial ;
- la patte de fixation est une bande qui s'étend dans un plan parallèle audit plan axial ;
- la languette de fixation et la patte de fixation sont adjacents, plan sur plan ;
- lesdits moyens complémentaires de liaison comportent au moins un doigt d'orientation transversale orthogonale audit plan axial qui est porté par la patte de fixation et qui est reçu dans un cran formé dans la languette de fixation ;
- le tronçon d'extrémité libre avant de la branche de raccordement est une bande qui s'étend dans un plan axial vertical orthogonal au plan du disque et qui constitue ladite patte de fixation ;
- la patte de fixation est conformée en une pince dans laquelle est reçue la languette de fixation ;
- ladite pince comporte ladite bande et une lame parallèle qui porte ledit doigt ;
- la patte de fixation comporte une patte de stabilisation du ressort de rappel élastique qui coopère avec une portion de ladite glissière ;
- ladite patte de stabilisation s'étend transversalement et horizontalement à partir d'un bord d'orientation axiale de la patte de fixation et coopère avec une portion d'une aile horizontale de la glissière ;
- ladite une aile horizontale de la glissière comporte une languette de stabilisation qui s'étend axialement vers l'arrière dans le plan horizontal cette aile horizontale, et la patte de stabilisation est en appui sur une face supérieure de la languette de stabilisation ;
- la patte de fixation du ressort de rappel élastique comporte une patte de butée qui est en contact, axialement vers l'avant, avec une face de butée en vis-à-vis de la glissière ;
- ladite patte de butée s'étend à partir dudit bord d'orientation axiale de la patte de fixation ;
- ladite au moins une aile de la glissière qui comporte la languette de fixation est l'aile verticale de fond de la glissière ;
- le ressort de rappel élastique comporte des moyens de rattrapage d'un jeu d'usure de la garniture de friction du patin de freinage, qui se déforment plastiquement lorsqu'une course du patin de freinage jusqu'à sa position active de freinage, est supérieure audit jeu déterminé de fonctionnement ;
- le ressort de rappel élastique est réalisé en une seule pièce par découpe et formage d'une feuille de matériau.

L'invention propose un ressort de rappel élastique axial d'un patin de freinage, d'un frein à disque, vers une position inactive, dans lequel le ressort de rappel élastique comporte :
- une portion de fixation du ressort de rappel élastique sur un support fixe d'un frein à disque ; et
- une branche de raccordement qui est reliée, directement ou indirectement, au patin de freinage ;
caractérisé en ce que la portion de fixation du ressort de rappel élastique sur le support fixe comporte une patte de fixation qui s'étend vers l'avant selon une direction axiale parallèle à la direction de coulissement du patin de freinage, et qui comporte des moyens complémentaires de liaison, par coopération de formes complémentaires, avec un composant fixé sur le support fixe.

Selon d'autres caractéristiques du ressort de rappel élastique :
- il comporte des moyens de rattrapage d'un jeu d'usure d'une garniture de friction du patin de freinage, qui sont interposés entre ladite portion de fixation et ladite branche rigide, et qui se déforment plastiquement lorsqu'une course du patin de freinage, selon une direction axiale de déplacement jusqu'à une position active de freinage, est supérieure à un jeu déterminé de fonctionnement ;
- il est réalisé en une seule pièce par découpe et formage d'une feuille de matériau.

L'invention propose aussi une glissière de guidage en coulissement axial d'un patin de freinage d'un frein à disque qui épouse les parois d'un logement complémentaire d'un support fixe du frein à disque, et qui comporte une partie de glissement à section en forme de C comportant une aile inférieure horizontale, une aile supérieure horizontale, et une aile verticale de fond qui relie entre elles les deux ailes inférieure et supérieure, caractérisée en ce que au moins une aile de la glissière comporte une languette de fixation qui s'étend axialement et qui comporte des moyens complémentaires de liaison, par coopération de formes complémentaires, avec un ressort de rappel élastique du patin de freinage.

Selon une autre caractéristique de la glissière, elle est réalisée en une seule pièce par découpe et formage d'une feuille de matériau.

L'invention propose un kit de remplacement pour un frein à disque de véhicule automobile selon l'invention, caractérisé en ce qu'il comporte au moins un patin de freinage et deux ressorts de rappel élastique appariés audit patin de freinage dont chacun est réalisé selon l'invention.

Le kit de remplacement peut comporter de plus deux ressorts de montage du patin de freinage dans le frein à disque.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective éclatée qui représente un frein à disque comportant un exemple de ressort de rappel élastique en une seule pièce selon l'état de la technique ;
- la figure 2 est une vue de face qui représente le support fixe du frein à disque de la figure 1 muni de coulisses pour recevoir des ressorts de rappel élastique d'un patin de freinage associé ;
- la figure 3A est une vue schématique en perspective qui illustre un exemple de réalisation dans lequel chaque oreille d'un patin de freinage est équipée d'un ressort « radial » ;
- la figure 3B est une vue de détail de la représentation à la figure 3A ;
- la figure 4 est une vue partielle en perspective illustrant l'assemblage d'un patin de freinage avec un ressort radial dans un bras d'une chape formant support fixe muni d'une glissière rapportée ;
- les figures 5 et 6 sont deux vues illustrant en détail la conception d'un élément lamellaire formant glissière selon l'état de la technique ;
- la figure 7 est une vue de détail en perspective qui représente un ressort de rappel élastique du patin de freinage en une seule pièce déformable plastiquement selon une alternative de conception ;
- la figure 8 est une vue en perspective illustrant un exemple de réalisation d'une glissière d'un frein à disque selon l'invention conçue pour permettre la fixation d'un ressort de rappel élastique ;
- la figure 9 est une vue en perspective illustrant un exemple de réalisation d'un ressort de rappel élastique selon l'invention conçu pour sa fixation sur la glissière illustrée à la figure 8 ;
- la figure 10 est une vue en perspective illustrant les composants des figures 8 et 9 en position assemblés, l'ensemble étant illustré monté sur le frein à disque et dans un état « neuf » du ressort de rappel élastique non déformé élastiquement ni plastiquement.

### DESCRIPTION DETAILLEEE DES FIGURES

Dans la suite de la description, des éléments présentant une structure identique ou des fonctions analogues seront désignés par des mêmes références.

On adoptera à titre non limitatif et sans référence à la gravité terrestre, des orientations axiales, verticales et transversales en référence au trièdre "A,V,T" des figures.

L'orientation axiale "A" est dirigée d'arrière en avant, parallèlement à un axe "B" de rotation du disque 12.

On définit le plan horizontal comme étant un plan axial transversal.

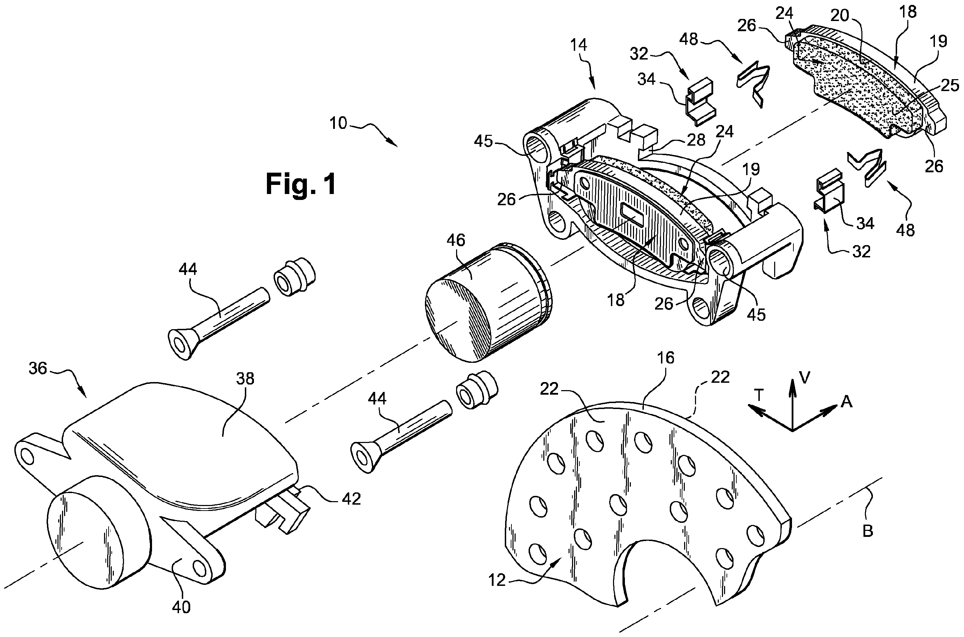

On a représenté schématiquement à la figure 1 un frein à disque 10 de véhicule automobile. Il s'agit ici d'un frein à disque 10 dit à "étrier flottant" ou "étrier coulissant".

De manière connue, le frein à disque comporte un disque 12 qui est monté tournant autour d'un axe "B" de rotation d'orientation axiale. Le disque 12 est solidaire en rotation avec une roue (non représentée) du véhicule automobile.

Le frein à disque 10 comporte un support 14, aussi appelé chape, qui est monté fixe par rapport au châssis (non représenté) du véhicule. Le support fixe 14 chevauche un bord périphérique 16 du disque 12.

Deux patins de freinage opposés 18, arrière et avant (aussi appelés intérieur et extérieur) sont montés coulissant axialement dans le support fixe 14 de part et d'autre du disque 12.

Les deux patins de freinage 18, arrière et avant, présentent une structure et un agencement sur le support fixe 14 qui sont identiques par symétrie par rapport à un plan transversal vertical médian.

Par la suite, on ne décrira que le patin de freinage 18 arrière, à gauche en considérant la figure 1, la description étant applicable au patin de freinage 18 avant en inversant les directions avant et arrière.

Le patin de freinage arrière 18 se présente sous la forme d'une plaque transversale verticale 19 support de garniture de friction. Le patin de freinage arrière 18 présente une face avant 20, qui est orientée vers une face arrière 22 en vis à vis du disque 12 qui est en forme d'une piste annulaire. La face avant 20 porte une garniture de friction 24 dont une face transversale et verticale avant de friction 25 est apte à coopérer avec la face 22 du disque 12.

Chacune des extrémités transversales opposées du patin de freinage 18 comporte une oreille latérale 26 qui est montée coulissante, avec jeu, dans un logement ou coulisse 28 associée d'un bras associé 27 de la chape ou support fixe 14.

Chaque coulisse 28 est d'orientation axiale et présente, en section par un plan vertical et transversal orthogonal aux axes A et B, une forme de "C" ouvert transversalement vers l'oreille latérale associée 26 du patin de freinage 18. La coulisse 28 est délimitée transversalement par un fond 30 d'orientation axiale et globalement verticale, et elle est délimitée verticalement, vers le haut par une face horizontale et axiale supérieure 33, et vers le bas par une face horizontale et axiale inférieure 31.

Une glissière 32 est ici interposée transversalement entre chaque oreille latérale 26 et la coulisse 28 associée.

La conception d'une telle glissière est illustrée et décrite en détail dans le document FR-A1-3.005.127.

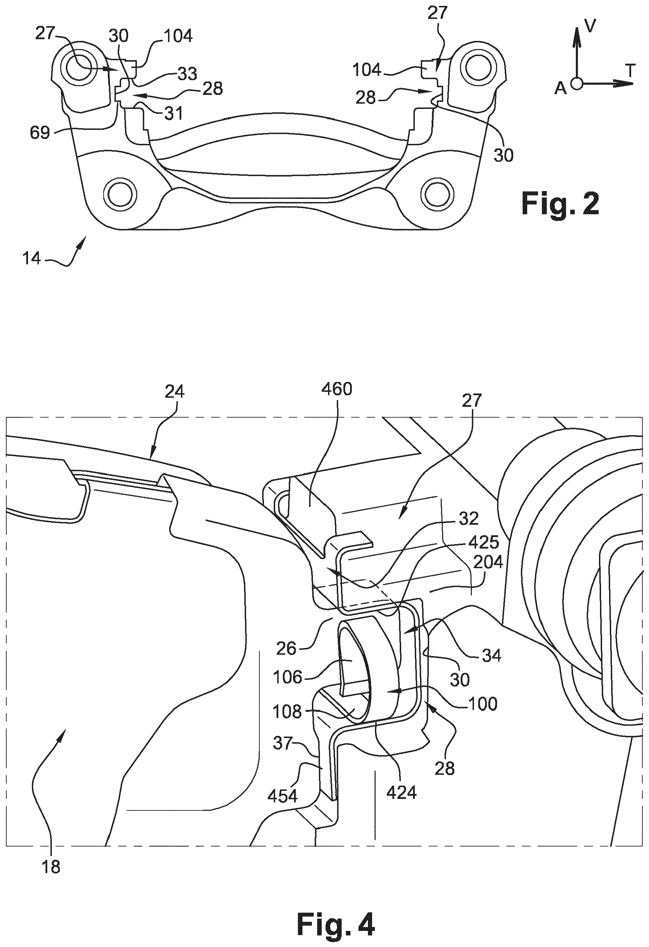

Chaque glissière 32 est un élément lamellaire formé par un ressort à lame de section en "C" qui épouse les parois de la coulisse 28 associée (voir notamment figure 4).

Chaque oreille 26 est ici reçue en coulissement axial dans son logement 28 associé avec interposition d'un élément lamellaire 32 en acier à ressort associé.

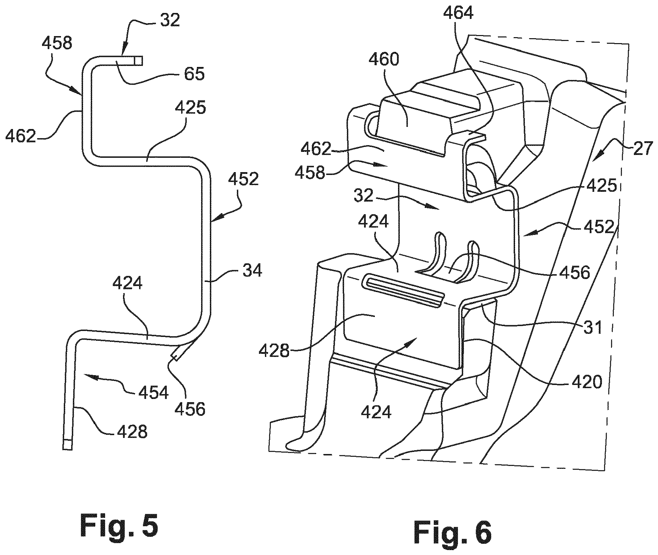

Comme l'illustrent plus particulièrement les figures 5 et 6, un tel élément lamellaire 32 en forme de glissière comporte une partie supérieure 452 d'orientation axiale, dite de glissement, à section en forme de C qui est reçue et verrouillée dans le logement 28 associé, qui comporte une première aile 424 inférieure de glissement, d'orientation générale sensiblement horizontale, qui est interposée entre la branche 108 de glissement du ressort de patin 100 et la face inférieure 31 du logement 28 du support fixe 14.

La partie supérieure 452 comporte une deuxième aile 425 supérieure d'appui vertical, d'orientation générale horizontale, qui est interposée entre un facette horizontale supérieure de l'oreille latérale 26 associée du patin de freinage 18 et la face horizontale supérieure 33 du logement associé 28.

L'élément lamellaire 32 comporte encore une partie 454 inférieure d'appui, d'orientation axiale, comportant une troisième aile 428 d'appui transversal qui prolonge l'aile 424 de glissement, qui s'étend dans un plan vertical orthogonal au plan de l'aile 424 de glissement. La partie inférieure d'appui 454 est agencée au contact d'une surface 420 de reprise d'appui transversal appartenant au bras 27 du support fixe 14, et elle est à apte à former une butée transversale pour une facette inférieure verticale associée 37 du patin de freinage 18.

Ainsi, l'élément lamellaire 32 comporte une première aile inférieure 424 de glissement qui est globalement parallèle à la deuxième aile 425 supérieure d'appui vertical.

Les deux ailes horizontales supérieure 425 et inférieure 424 sont reliées entre elles par une aile ou fond 34 d'orientation verticale et axiale qui est agencé en regard du fond vertical 30 du logement 28, et qui est interposé entre l'oreille latérale 26 et le fond vertical 30 du logement ou coulisse 28.

Par ailleurs la troisième aile 428 d'appui transversal, extérieure au logement 28, est sensiblement orthogonale à la première aile inférieure 424 de glissement.

L'élément lamellaire 32 comporte encore une partie supérieure 458 d'immobilisation axiale, qui prolonge la deuxième aile 425 d'appui vertical vers le haut, et qui coopère avec une partie 460 complémentaire du bras 27 pour immobiliser axialement l'élément lamellaire 32 par rapport au bras 27.

La première aile inférieure 424 de glissement comporte une languette 456 d'ancrage qui est découpée dans la première aile inférieure 424, qui fait saillie vers le bas, et qui coopère avec la face inférieure 31 du logement 28 pour s'ancrer dans cette face inférieure 31 du logement 28, comme représenté aux figures 5 et 6, et pour ainsi garantir un contact "plan sur plan" entre l'aile 425 et la surface associée en vis-à-vis.

Comme l'illustrent les figures 4 et 6, la partie 460 complémentaire du bras est conformée en un plot de longueur axiale inférieure à celle du logement 28 et la partie 458 d'immobilisation de l'élément lamellaire 32 comporte pour l'essentiel une quatrième aile verticale 462 à partir de laquelle s'étendent deux pattes 464 qui enserrent la partie 460 en forme de plot qui constitue une butée axiale avec laquelle coopèrent les deux pattes opposées 464.

La glissière ou élément lamellaire 32 permet un degré déterminé de mouvement du patin de freinage 18 dans le support fixe 14, c'est-à-dire, généralement mais de manière non limitative, un mouvement de coulissement axial, et un mouvement de coulissement transversal accompagnant la rotation du disque 12, lors d'une action de freinage.

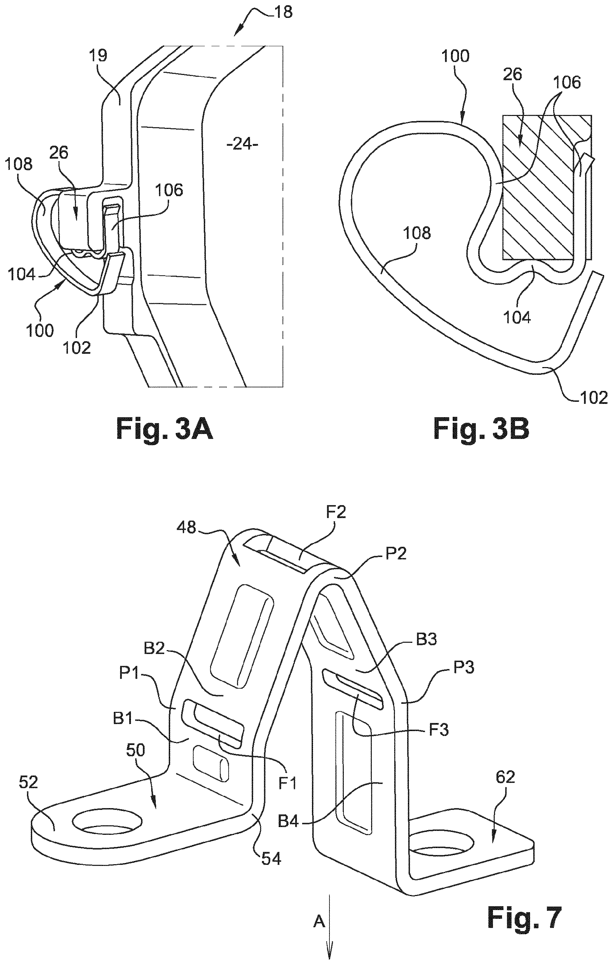

De manière non limitative, chaque oreille latérale 26 peut être équipée d'un ressort dit de montage, du type de celui décrit et représenté dans le document FR-A1-2.925.636 et dont un exemple est illustré en détail aux figures 3A, 3B et 4.

La figure 4 illustre l'assemblage d'un ressort de montage sur une oreille latérale 26 et le montage de l'oreille ainsi équipée dans une glissière associée 32.

On a représenté schématiquement, aux figures 3A, 3B et 4, un ressort 100 de montage du patin de freinage 18, aussi appelé ressort radial, susceptible d'équiper les oreilles 26 d'un patin de freinage 18 pour le montage et le guidage du patin de freinage 18 dans les coulisses axiales associées 28 du support fixe 14, avec, ou non, la présence de glissières 32.

De manière connue, chaque ressort 100 de patin comporte une branche inférieure 102 de glissement qui coopère avec une face horizontale inférieure de la coulisse associée et qui sollicite une facette horizontale supérieure de l'oreille 26 en appui verticalement vers le haut contre une face supérieure en vis-à-vis de la coulisse 28.

Selon la conformation illustrée, le ressort 100 de patin est communément appelé "ressort escargot" et il comporte une branche 104 prenant appui sous une facette inférieure horizontale de l'oreille 26 du patin de freinage 18, cette branche 104 faisant partie d'une branche de fixation, ou agrafe, 106 qui pince élastiquement l'oreille 26 pour assurer la fixation du ressort 100 de patin sur l'oreille 26.

Le ressort 100 de patin comporte encore une branche incurvée 108 qui relie la branche de fixation 106 à la branche inférieure 102 de glissement en assurant principalement l'élasticité du ressort de patin 100.

Le patin de freinage 18 est ainsi monté coulissant selon une direction axiale, parallèle à l'axe de rotation B du disque 12, dans le support fixe 14 sur une course de fonctionnement entre :
- une position avant active dans laquelle la face transversale avant de friction 25 de la garniture de friction 24 est en appui contre la face 22 en vis à vis du disque 12 ; et
- une position arrière inactive dans laquelle la face transversale avant de friction 25 de la garniture de friction 24 du patin de freinage 18 est écartée axialement par rapport à la face associée 22 du disque 12, d'un jeu déterminé de fonctionnement "J1".

Lors d'une opération de freinage, le serrage des patins de freinage 18, depuis leur position inactive jusqu'à leur position active, est commandé par un étrier de frein 36 du frein à disque 10.

De manière connue, l'étrier 36 comporte une voûte 38 qui s'étend axialement au-dessus du support fixe 14 en le recouvrant et deux ailes arrière 40 et avant 42 qui s'étendent radialement depuis des bords d'extrémité arrière et avant de la voûte 38 vers l'axe "B".

L'aile avant 42 s'étend en regard du patin de freinage 18 avant, et l'aile arrière 40 s'étend en regard du patin de freinage 18 arrière.

L'étrier 36 est ici monté coulissant axialement par rapport au support fixe 14 par l'intermédiaire de deux colonnettes parallèles 44 de guidage dont chacune est reçue en coulissement dans un alésage axial associé 45 du support fixe 14.

De manière connue, l'aile arrière 40 de l'étrier 36 porte au moins un piston 46 axial dont une face transversale avant d'appui est susceptible, lors d'une opération de freinage, de coopérer avec la face transversale en vis à vis du patin de freinage arrière 18 pour le solliciter axialement vers l'avant, pour exercer un effort axial de serrage de la face transversale avant de friction 25 de la garniture de friction 24 en appui contre la face 22 en vis à vis du disque 12.

Par réaction, l'étrier 36 coulisse axialement vers l'arrière et, de manière symétrique, l'aile avant 42 sollicite le patin de freinage 18 avant pour serrer la face transversale arrière de friction 25 de la garniture de friction 24 du patin de freinage 18 avant en appui contre la face 22 avant en vis à vis du disque 12.

Lorsque, à l'issue de l'opération de freinage, le piston 46 cesse de solliciter le patin de freinage 18 arrière, le retour des patins de freinage 18, depuis leur position active vers leur position inactive, est généralement provoqué par la rotation du disque 12 qui "repousse" chaque patin de freinage 18 vers sa position inactive.

Néanmoins, dans certains cas, on a constaté que la force de répulsion exercée par le disque 12 n'est pas suffisante pour repousser chacun des patins de freinage 18 jusqu'à sa position inactive respective. La garniture de friction 24 des patins de freinage 18 continue ainsi à frotter contre le disque 12, alors qu'aucune action de serrage des garnitures de friction des patins de freinage par l'étrier 36 n'est commandée.

A l'issue d'une opération de freinage, pour garantir que chaque patin de freinage 18 revient dans une position inactive, le frein à disque 10 est équipé de moyens de rappel élastique du patin de freinage 18 vers sa position inactive. Ces moyens de rappel élastique sont réalisés sous la forme de ressorts de rappel élastique qui sont interposés entre le patin de freinage 18 et le support fixe 14.

Le frein à disque 10 comporte à titre d'exemple non limitatif quatre ressorts de rappel élastique 48, aussi appelés ressorts « écarteurs », dont chacun - à titre non limitatif - est ici agencé entre un bras 27 du support fixe 14 et une oreille latérale associée 26 d'un patin de freinage 18.

Ainsi, un patin de freinage 18, arrière ou avant, est ici associé à deux ressorts de rappel élastique 48 dont chacun coopère, directement ou indirectement, avec la plaque 19 porte-garniture de friction.

A titre non limitatif, les quatre ressorts 48 de rappel élastique sont de même conception globale et ils sont agencés de la même manière sur le support fixe 14. Le principe de conception d'un seul de ces ressorts 48 de rappel élastique du patin de freinage arrière 18 sera donc décrit ici en détails.

Un ressort de rappel élastique 48 se présente sous la forme d'une bande métallique, par exemple en acier, de section rectangulaire dont la largeur s'étend verticalement et qui est réalisée par exemple par découpe, emboutissage et pliage d'une tôle d'acier inoxydable d'épaisseur constante.

En se reportant notamment à la figure 7, un ressort de rappel élastique 48 comporte une première portion 50, dite de fixation, en forme générale d'une patte de fixation 52 du ressort 48 sur le support fixe 14, qui est reliée à l'extrémité d'une première branche rigide B1 et qui s'étend dans un plan orthogonal pour être fixée, par exemple par rivetage, sur une partie associée du support fixe 14.

A partir de la première branche rigide rectiligne d'orientation axiale B1, le ressort de rappel élastique 48 se prolonge successivement par trois autres branches rigides rectilignes B2, B3 et B4 respectivement.

La première branche B1 a son extrémité proximale reliée au coude 54, tandis que son extrémité distale est située axialement hors de la coulisse 28 pour être reliée à la deuxième branche rigide B2.

La deuxième branche rigide B2 est reliée à la première branche rigide B1 par un premier pli P1 déformable.

Comme la première branche B1, la deuxième branche rigide B2 est conformée en une bande dans le prolongement de la première branche rigide B1.

De façon à ce que le premier pli P1 en forme de coude constitue une zone déformable plastiquement, cette portion est affaiblie mécaniquement, ici au moyen d'une fenêtre ou lumière F1 qui est ici une découpe débouchante de forme rectangulaire.

De la même manière, la troisième branche rigide B3 est reliée à la deuxième branche rigide B2 par un deuxième pli déformable plastiquement P2.

Le deuxième pli P2 est une portion coudée de la bande de matériau comportant une fenêtre F2.

Enfin, la quatrième branche B4 est reliée à la troisième branche rigide B3 par un troisième pli déformable plastiquement P3.

Le troisième pli P3 comporte une fenêtre F3 analogue aux fenêtres F1 et F2.

La quatrième branche rigide B4 est rectiligne et d'orientation générale axiale parallèle à la première branche rigide B1 et elle se prolonge ici par un tronçon d'extrémité libre avant destiné à être relié directement au patin de freinage 18 associé.

Le tronçon d'extrémité libre avant est ici réalisé par prolongement de la bande constitutive des branches Bi.

Selon les conceptions illustrées à la figure 1 ou à la figure 7, le tronçon d'extrémité libre avant du ressort de rappel élastique 48 est conformé en une patte active 62 qui est coudée à angle droit pour agir directement sur une portion en vis-à-vis de la plaque porte-garniture de friction (figure 1) ou pour être fixée directement sur une partie associée du patin de freinage 18 (figure 7), et par exemple de sa plaque 19 porte-garniture de friction.

Aux figures, le ressort de rappel élastique 48 est représenté dans un état initial "neuf", c'est-à-dire avant toute déformation plastique des plis Pi.

Dans cet état, neuf ou initial, la première branche B1 et la quatrième branche rigide B4 sont sensiblement parallèles entre elles et d'orientation axiale en étant agencées à distance transversale l'une de l'autre.

Dans l'état - non représenté - de déformation plastique maximale du ressort de rappel élastique 48, les première et quatrième branches rigide B1 et B4 sont toujours sensiblement parallèles, d'orientation axiale et espacées l'une de l'autre sensiblement de la même distance, tandis que les trois plis Pi ont été déformés plastiquement.

A titre d'exemple, l'épaisseur de la bande de matériau est comprise entre 0,5 et 0,8 millimètre et le matériau est un acier inoxydable de référence X2CrNbCu21 ou de référence 304L (X2CrNi18-9 / X2CrNi19-11).

A titre d'exemple, le déplacement maximal correspondant à une usure maximale "J2" est égal à environ 14 millimètres.

Lorsque le patin de freinage 18 est sollicité vers sa position active par le piston 46, il parcourt tout d'abord le trajet correspondant au jeu "J1" déterminé de fonctionnement.

Lors de cette première partie de la course, le patin de freinage 18 entraîne la branche B4 du ressort de rappel élastique 48 de manière à tendre élastiquement le ressort de rappel élastique 48 entre la portion de fixation 50 fixée au support fixe 14, et la branche B4 reliée au patin de freinage 18.

Les parties déformables élastiquement du ressort de rappel élastique 48 atteignent alors leur état d'élongation maximale.

Les plis Pi se déforment, d'abord élastiquement, puis plastiquement.

La face transversale avant de la garniture de friction 24 du patin de freinage 18 est encore écartée, par rapport à la face ou piste annulaire associée du disque 12, d'une distance égale au jeu "J2" d'usure. Le patin de freinage 18 poursuit sa course axiale jusqu'à sa position active.

Lors de cette deuxième partie de course, les parties déformables élastiquement ne pouvant plus se déformer « élastiquement », l'effort de serrage est transmis aux plis Pi déformables plastiquement du ressort de rappel élastique 48.

Les plis Pi sont alors déformés plastiquement, les déformations élastiques des parties déformables plastiquement étant négligeables par rapport à leur déformation plastique.

Lorsque l'opération de freinage prend fin, le patin de freinage 18 est rappelé vers sa position inactive par les parties déformables élastiquement qui reprennent leur état de repos.

Le patin de freinage 18 est ainsi à nouveau écarté du disque 12 d'une distance égale au seul jeu "J1" déterminé de fonctionnement; le jeu "J2" d'usure ayant été absorbé par la déformation plastique des plis Pi déformables plastiquement.

Le ressort de rappel élastique 48 permet ainsi de garantir que le patin de freinage 18 est rappelé dans sa position inactive.

De plus, l'agencement de plis Pi déformables plastiquement permet d'éviter que l'effort de serrage à exercer par le piston 46 pour actionner le patin de freinage 18 vers sa position active ne devienne trop élevé.

En outre, en conservant un jeu "J1" de fonctionnement constant entre le patin de freinage 18 en position inactive et le disque 12, le temps de réponse du système de freinage demeure constant indépendamment de l'usure de la garniture de friction 24.

A usure complète maximale de la garniture de friction, le ressort de rappel élastique 48 est déformé plastiquement et, comme le patin de freinage usé 18, il doit être remplacé.

Selon les deux conceptions illustrées schématiquement aux figures 1 et 7, le ressort de rappel élastique comporte, de manière intégrée, la patte active 62 destinée à "agir" sur le patin de freinage, et notamment sur la plaque porte-garniture 19.

On décrira maintenant un premier de conception selon l'invention selon laquelle le ressort de rappel élastique 48 est relié et fixé de manière indirecte à un bras du support fixe 14, c'est à dire à une glissière 32 équipant le bras 27 associé.

Plus précisément, la portion de fixation 50 du ressort de rappel élastique 48 sur le support fixe 14 comporte une patte de fixation 52 qui s'étend axialement vers l'avant selon une direction parallèle à la direction de coulissement du patin de freinage 18, tandis que l'aile verticale 34 de la glissière 32 associée à ce ressort comporte une languette de fixation 466 qui s'étend axialement vers l'arrière. La patte de fixation 52 et la languette de fixation 466 comportent des moyens complémentaires de liaison par coopération de formes complémentaires qui permettent un assemblage des deux composants par emboîtement élastique selon la direction axiale.

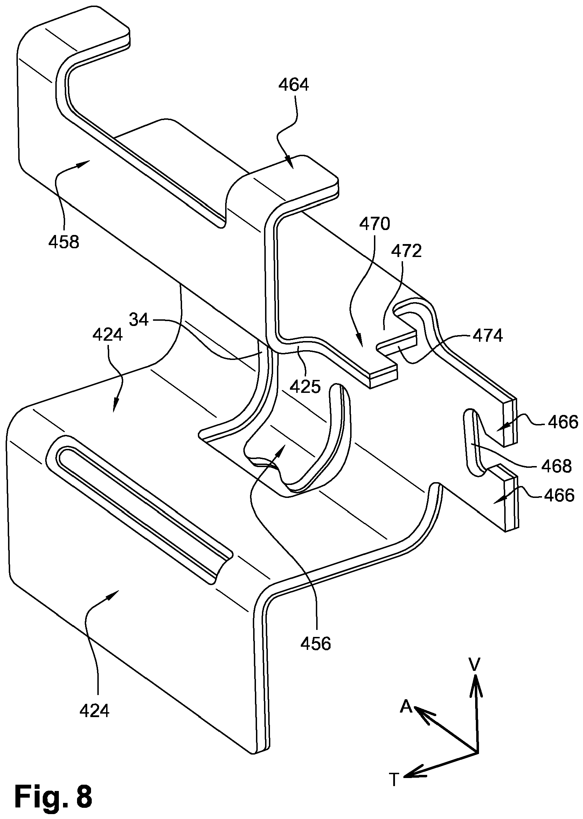

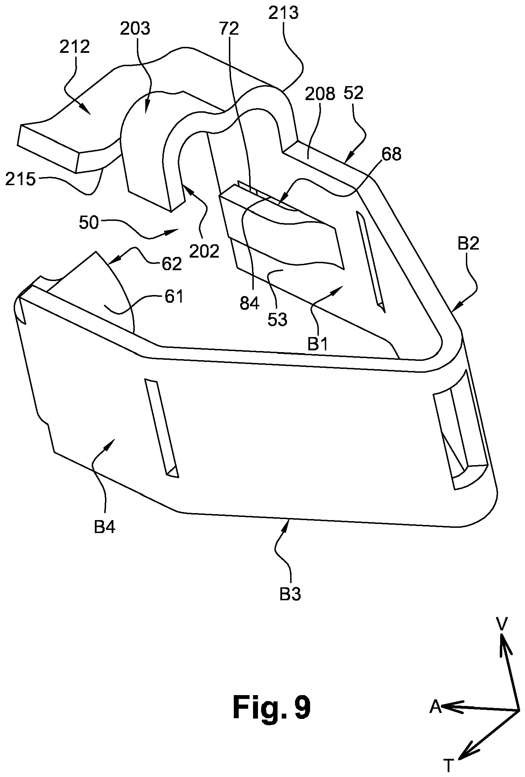

En se reportant aux figures 8 et 9 on voit que tant la patte de fixation 52 que la languette de fixation sont chacun une de bande plane verticale et d'orientation axiale.

La languette de fixation 466 s'étend dans le prolongement de l'aile verticale 34, et la patte de fixation 52 s'étend dans le prolongement de la branche de raccordement B4.

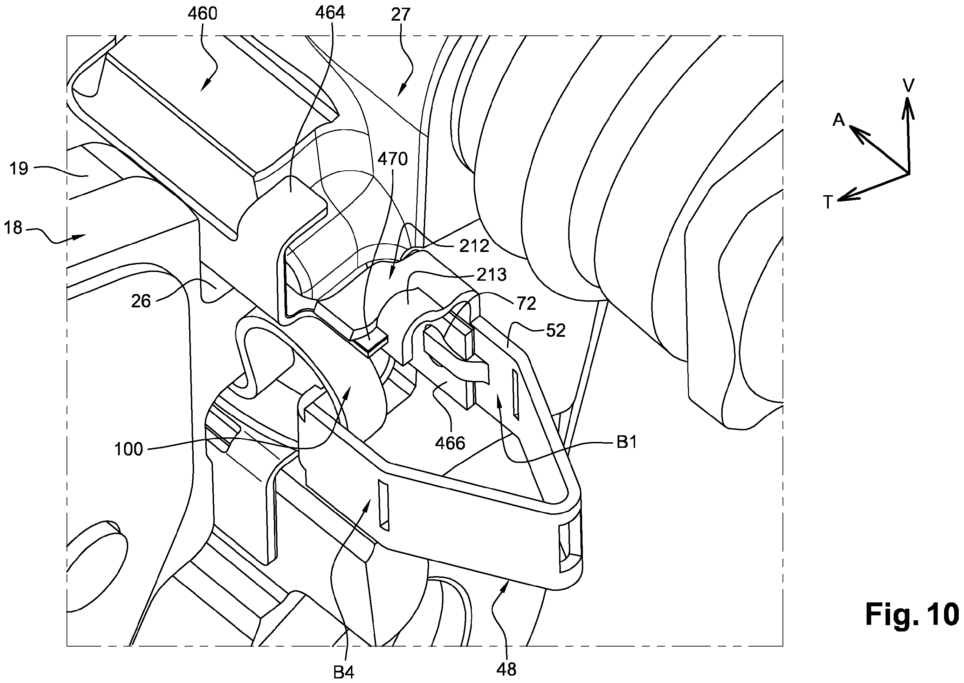

En position assemblé, la languette de fixation 466 et la patte de fixation 52 sont adjacents, plan sur plan (Voir figure 10).

Les moyens complémentaires de liaison comportent de plus un doigt 72 d'orientation transversale orthogonale au plan axial et qui est porté par la patte de fixation 52.

A cet effet, la patte de fixation 52 est conformée en une pince dans laquelle la languette de fixation 466 est reçue axialement.

La pince est constituée de la bande constitutive de la patte de fixation 52 et d'une lame 68 parallèle qui porte le doigt 72 qui est orienté transversalement en direction d'une face en vis-à-vis 53 de la patte de fixation.

La lame 68 est réalisée à la faveur d'un crevé dans la patte de fixation 52 et la distance transversale séparant les faces en vis-à-vis de la patte de fixation 52 et de la lame 68 est sensiblement égale à l'épaisseur de la languette de fixation 466.

Pour recevoir le doigt 72, la languette de fixation 466 comporte une découpe 468 constituant un cran dans lequel le doigt 72 vient s'emboîter.

La patte de fixation 52 comporte une patte 212 de stabilisation du ressort de rappel élastique 48 qui coopère avec une portion de l'aile horizontale supérieure 425 de la glissière 32.

La patte de stabilisation 212 s'étend transversalement et horizontalement à partir d'un bord supérieur 208 d'orientation axiale de la patte de fixation 52, à la faveur d'un coude plié à angle droit 213.

L'aile horizontale supérieure 425 de la glissière 32 comporte une languette de stabilisation 470 qui s'étend axialement vers l'arrière dans le plan horizontal cette aile horizontale 425, et la patte de stabilisation 212 est en appui vertical, par sa face inférieure 215 sur une face supérieure 472 de la languette de stabilisation 470.

La patte de fixation 52 du ressort de rappel élastique 48 comporte une patte de butée 202 qui est en contact, axialement vers l'avant, avec une face de butée en vis-à-vis 474 de la glissière 32 pour bloquer le coulissement axial du ressort de rappel élastique 48 dans le sens correspondant au déplacement axial du patin de freinage 18 vers sa position active de freinage.

La patte de butée 202 s'étend à partir du bord 208 d'orientation axiale de la patte de fixation 52. A la faveur d'un coude plié 203, la patte de butée s'étend dans un plan axial vertical et son bord vertical avant 205 est apte à coopérer avec le bord horizontal en vis-à-vis constituant la face de butée 474.

En position montée et assemblée du ressort 48 sur la glissière 32, le ressort de rappel élastique 48 ne coopère qu'avec la glissière 32, sans être en contact ni en appui sur le bras 27.

Lors de l'assemblage des deux composants, c'est-à-dire lorsque, par un mouvement axial relatif, le ressort de rappel élastique 48 est accouplé à la glissière 32 associée, les moyens complémentaires de liaison par coopération de formes complémentaires coopèrent par emboîtement élastique.

On aboutit à l'état illustré à la figure 10.

Deux zones fonctionnelles ont été ajoutées à une glissière selon l'état de la technique. La première zone en forme de pince et de languette permet le "clipsage" du ressort de rappel élastique sur la languette de fixation 466, et ainsi une première mise en place et son maintien dans l'attente de son "armement".

La deuxième zone 212-202 permet dans un premier temps de maintenir le ressort de rappel élastique 48 dans la direction radiale, puis durant les phases de fonctionnement du frein à disque, l'arrêt en translation et en rotation. Pour la rotation, la première zone permet aussi une reprise d'effort dans la direction tangentielle.

A titre d'exemple non limitatif, la patte active 62 est ici conformée pour coopérer avec une branche du ressort de patin 100, c'est à dire pour agir de manière indirecte sur la plaque porte-garniture 19.

Du fait de la conception de la partie de fixation 50 et de la glissière 32 les deux ressorts 48 équipant un patin de freinage 18, et les deux glissières équipant les deux bras opposés du support fixe 14, ne sont pas identiques et interchangeables, mais ils constituent une paire de deux ressorts 48 associés, et de deux glissières associées 32, appariés à un patin de freinage avant et/ou arrière, dont la conception est symétrique par rapport à un plan vertical et axial médian.

L'invention n'est pas limitée au mode de réalisation qui vient d'être décrit. Il est notamment possible de concevoir des inversions mécaniques simples de structure et fonctionnelles entre la patte de fixation 52 et la languette de fixation.

Un ensemble ou kit de remplacement d'un jeu usagé de patins de freinage 18 comporte, pour chaque patin de freinage, un patin de freinage 18 neuf proprement dit équipé d'une une paire de ressorts de rappel élastique 48 appariés au patin de freinage associé.

Si le patin de freinage est du type équipé de ressorts de montage de patin 100, le kit de remplacement comporte, pour chaque patin de freinage, un patin neuf équipé de ses deux ressorts de patin 100, un pour chacune de ses deux oreilles radiales 26.

## Revendications

1. Frein à disque (10) de véhicule automobile qui comporte:
- un disque (12) de frein qui s'étend dans un plan transversal à un axe (A) d'orientation axiale de rotation du disque ;
- un support (14) fixe comportant au moins deux bras (27) opposés d'orientation générale verticale (V) comportant chacun un logement (28) axial à section en forme de C ouvert horizontalement en direction du bras (27) opposé et qui est délimité par une face (33) supérieure et par une face (31) inférieure d'orientation générale horizontale ;
- pour chaque un bras (14) du support fixe (14), une glissière (32) qui épouse les parois du logement (28), qui est fixée au support fixe et qui comporte au moins une partie (452) supérieure axiale de glissement à section en forme de C qui est reçue et verrouillée dans le logement (28) associé, cette partie supérieure (452) comportant une aile (424) inférieure horizontale, une aile (425) supérieure horizontale, et une aile verticale de fond (34) qui relie entre elles les deux ailes inférieure (424) et supérieure (425)
- au moins un patin (18) de freinage comportant deux oreilles (26) latérales opposées de montage dont chacune est reçue dans un logement (28) associé d'un bras (14) associé avec interposition d'une dite glissière (32);
dans lequel ledit au moins un patin de freinage (18) comporte une plaque transversale verticale (19) qui porte une garniture de friction (24) dont une face transversale de friction (25) coopère avec une piste de freinage (22) associée du disque (12), le patin de freinage (18) étant monté coulissant axialement dans le support fixe (14) entre une position avant active dans laquelle ladite face (25) de friction est en appui contre la piste de freinage associée (22) du disque (12), et une position arrière inactive dans laquelle ladite face (25) de friction est espacée axialement de ladite piste de freinage associée du disque, d'un jeu (J1) déterminé de fonctionnement ;
- et au moins un ressort de rappel élastique (48) du patin de freinage (18) vers sa position inactive comportant au moins une portion de fixation (50) du ressort de rappel élastique (48) sur le support fixe (14), et comportant une branche rigide (B4) de raccordement, d'orientation axiale parallèle à la direction de coulissement du patin de freinage, et qui est reliée au patin de freinage (18), **caractérisé en ce que** :
- la portion de fixation (50) du ressort de rappel élastique (48) sur le support fixe (14) comporte une patte de fixation qui s'étend vers l'avant selon une direction axiale parallèle à la direction de coulissement du patin de freinage (18) ;
- au moins une aile (34) de la glissière (32) associée à ce ressort comporte une languette de fixation (466) qui s'étend axialement vers l'arrière ;
- la patte de fixation (52) et la languette de fixation (466) comportent des moyens complémentaires de liaison par coopération de formes complémentaires.

2. Frein à disque selon la revendication 1, **caractérisé en ce que** les moyens complémentaires de liaison par coopération de formes complémentaires de la languette de fixation (466) et de la patte de fixation (52) coopèrent par emboîtement élastique lors de leur assemblage.

3. Frein à disque selon l'une des revendications 1 ou 2, **caractérisé en ce que** :
- la languette de fixation (466) est une bande qui s'étend dans un plan axial ;
- la patte de fixation (52) est une bande qui s'étend dans un plan parallèle audit plan axial;
- la languette de fixation (466) et la patte de fixation (52) sont adjacents, plan sur plan.

4. Frein à disque selon la revendication 3, **caractérisé en ce que** :
- lesdits moyens complémentaires de liaison comportent au moins un doigt (72) d'orientation transversale orthogonale audit plan axial qui est porté par la patte de fixation (52) et qui est reçu dans un cran (468) formé dans la languette de fixation (466).

5. Frein à disque selon la revendication 3, **caractérisé en ce que** le tronçon d'extrémité libre avant de la branche de raccordement (B4) est une bande qui s'étend dans un plan axial vertical orthogonal au plan du disque (12) et qui constitue ladite patte de fixation (52).

6. Frein à disque selon l'une des revendications 3 ou 4, **caractérisé en ce que** la patte de fixation (52) est conformée en une pince dans laquelle est reçue la languette de fixation (466).

7. Frein à disque selon la revendication 6 en combinaison avec la revendication 5, **caractérisé en ce que** ladite pince comporte ladite bande et une lame parallèle (68) qui porte ledit doigt (72).

8. Frein à disque selon la revendication 1, **caractérisé en ce que** la patte de fixation (52) comporte une patte de stabilisation (212) du ressort de rappel élastique (48) qui coopère avec une portion de ladite glissière (32).

9. Frein à disque selon la revendication 8, **caractérisé en ce que** ladite patte de stabilisation (52) s'étend transversalement et horizontalement à partir d'un bord (208) d'orientation axiale de la patte de fixation (52) et coopère avec une portion d'une aile horizontale (425) de la glissière (32).

10. Frein à disque selon la revendication 9, **caractérisé en ce que** ladite une aile horizontale (425) de la glissière (32) comporte une languette de stabilisation (470) qui s'étend axialement vers l'arrière dans le plan horizontal cette aile horizontale (425), et **en ce que** la patte de stabilisation (52) est en appui sur une face supérieure (472) de la languette de stabilisation (470).

11. Frein à disque selon l'une quelconque des revendications précédentes, **caractérisé en ce que** la patte de fixation (52) du ressort de rappel élastique (48) comporte une patte de butée (202) qui est en contact, axialement vers l'avant, avec une face de butée en vis-à-vis (474) de la glissière (32).

12. Frein à disque selon la revendication 11 prise en combinaison avec la revendication 9, **caractérisé en ce que** ladite patte de butée (202) s'étend à partir dudit bord (208) d'orientation axiale de la patte de fixation (52)

13. Frein à disque selon la revendication 1, **caractérisé en ce que** ladite au moins une aile (34) de la glissière (32) qui comporte la languette de fixation est l'aile verticale de fond (34) de la glissière.

14. Frein à disque (10) selon la revendication 1, **caractérisé en ce que** le ressort de rappel élastique (48) comporte des moyens de rattrapage d'un jeu d'usure (J2) de la garniture de friction (24) du patin de freinage (18), qui se déforment plastiquement lorsqu'une course du patin de freinage jusqu'à sa position active de freinage, est supérieure audit jeu déterminé de fonctionnement (J1).

15. Frein à disque (10) selon la revendication 1, **caractérisé en ce que** le ressort de rappel élastique (48) est réalisé en une seule pièce par découpe et formage d'une feuille de matériau.

16. Ressort (48) de rappel élastique axial d'un patin de freinage (18), d'un frein à disque (10) freinage selon l'une quelconque des revendications précédentes, vers une position inactive, dans lequel le ressort de rappel élastique (48) comporte :
- une portion de fixation (50) du ressort de rappel élastique (48) sur un support fixe d'un frein à disque (14) ; et
- une branche (B4) de raccordement qui est reliée, directement ou indirectement, au patin de freinage (18);
**caractérisé en ce que** la portion de fixation (50) du ressort de rappel élastique (48) sur le support fixe (14) comporte une patte de fixation (52) qui s'étend vers l'avant selon une direction axiale parallèle à la direction de coulissement du patin de freinage (18), et qui comporte des moyens complémentaires de liaison, par coopération de formes complémentaires, avec un composant (32) fixé sur le support fixe (14).

17. Ressort selon la revendication 16, **caractérisé en ce qu'**il comporte des moyens de rattrapage d'un jeu d'usure (J2) d'une garniture de friction (24) du patin de freinage (18), qui sont interposés entre ladite portion de fixation et ladite branche rigide (B4), et qui se déforment plastiquement lorsqu'une course du patin de freinage (18), selon une direction axiale de déplacement jusqu'à une position active de freinage, est supérieure à un jeu déterminé de fonctionnement (J1).

18. Ressort selon la revendication 16, **caractérisé en ce qu'**il est réalisé en une seule pièce par découpe et formage d'une feuille de matériau.

19. Glissière (32) de guidage en coulissement axial d'un patin de freinage (18) d'un frein à disque (10) qui épouse les parois d'un logement (28) complémentaire d'un support fixe (14) du frein à disque, et qui comporte une partie (452) de glissement à section en forme de C comportant une aile (424) inférieure horizontale, une aile (425) supérieure horizontale, et une aile verticale de fond (34) qui relie entre elles les deux ailes inférieure (424) et supérieure (425), **caractérisée en ce qu'**au moins une aile (34) de la glissière (32) comporte une languette de fixation (466) qui s'étend axialement et qui comporte des moyens complémentaires de liaison, par coopération de formes complémentaires, avec un ressort de rappel élastique (48) du patin de freinage selon l'une quelconque des revendications 16 à 18.

20. Glissière selon la revendication 19, **caractérisée en ce qu'**elle est réalisée en une seule pièce par découpe et formage d'une feuille de matériau.

21. Kit de remplacement pour un frein à disque de véhicule automobile selon l'une quelconque des revendications 1 à 15, **caractérisé en ce qu'**il comporte au moins un patin de freinage (18) et deux ressorts de rappel élastique (48) appariés audit patin de freinage (18) dont chacun est réalisé selon l'une quelconque des revendications 16 à 19.

22. Kit de remplacement selon la revendication 21, **caractérisé en ce qu'**il comporte de plus deux ressorts (100) de montage du patin de freinage dans le frein à disque.

## Patentansprüche

1. Scheibenbremse (10) für ein Automobilfahrzeug, die umfasst:
- eine Bremsscheibe (12), die sich in einer Ebene transversal zu einer Drehachse (A) der Scheibe mit axialer Orientierung erstreckt;
- einen festen Träger (14), umfassend wenigstens zwei entgegengesetzte Arme (27) mit allgemeiner vertikaler Orientierung (V), umfassend jeweils eine axiale Aufnahme (28) mit C-förmigem Querschnitt, die horizontal in Richtung des entgegengesetzten Arms (27) geöffnet ist, und die durch eine obere Fläche (33) und durch eine untere Fläche (31) mit allgemeiner horizontaler Orientierung begrenzt ist;
- für jeden Arm (14) des festen Trägers (14), eine Gleitführung (32), die an den Wänden der Aufnahme (28) anliegt, die am festen Träger befestigt ist, und die wenigstens einen oberen axialen Gleitteil (425) mit einem C-förmigen Querschnitt umfasst, der in der zugeordneten Aufnahme (28) aufgenommen und verriegelt ist, wobei dieser obere Teil (452) einen unteren horizontalen Flügel (424) umfasst, einen oberen horizontalen Flügel (425) sowie einen vertikalen Bodenflügel (34), der den unteren (424) und den oberen (425) Flügel miteinander verbindet,
- wenigstens einen Bremsklotz (18), umfassend zwei entgegengesetzte laterale Montageohren (26), von denen jedes in einer zugeordneten Aufnahme (28) eines zugeordneten Arms (14) mit Einfügung einer derartigen Gleitführung (32) aufgenommen ist;
wobei der wenigstens eine Bremsklotz (18) eine transversale vertikale Platte (19) umfasst, die einen Reibbelag (24) trägt, von dem eine transversale Reibfläche (25) mit einer zugeordneten Bremsbahn (22) der Scheibe (12) zusammenwirkt, wobei der Bremsklotz (18) in dem festen Träger (14) axial verschiebbar montiert ist zwischen einer vorderen aktiven Position, in der die Reibfläche (25) in Anlage gegen die zugeordnete Bremsbahn (22) der Scheibe (12) ist, und einer hinteren inaktiven Position, in der die Reibfläche (25) axial von der zugeordneten Bremsbahn der Scheibe um ein bestimmtes Funktionsspiel (J1) beabstandet ist;
- und wenigstens eine Feder (48) zur elastischen Rückstellung des Bremsklotzes (18) in Richtung seiner inaktiven Position, umfassend wenigstens einen Bereich (50) zur Befestigung der elastischen Rückstellfeder (48) am festen Träger (14), und umfassend einen starren Anschlussarm (B4) mit axialer Orientierung parallel zur Schieberichtung des Bremsklotzes, und der mit dem Bremsklotz (18) verbunden ist,
**dadurch gekennzeichnet, dass**:
- der Bereich (50) zur Befestigung der elastischen Rückstellfeder (48) am festen Träger (14) eine Befestigungslasche umfasst, die sich nach vorne entlang einer axialen Richtung parallel zur Schieberichtung des Bremsklotzes (18) erstreckt;
- wenigstens ein Flügel (34) der Gleitführung (32), die dieser Feder zugeordnet ist, eine Befestigungszunge (466) umfasst, die sich axial nach hinten erstreckt;
- die Befestigungslasche (52) und die Befestigungszunge (466) komplementäre Mittel zur Verbindung mittels Zusammenwirkung von komplementären Formen umfassen.

2. Scheibenbremse nach Anspruch 1, **dadurch gekennzeichnet, dass** die komplementären Mittel zur Verbindung mittels Zusammenwirkung von komplementären Formen der Befestigungszunge (466) und der Befestigungslasche (52) durch elastisches Einstecken während ihrer Montage zusammenwirken.

3. Scheibenbremse nach einem der Ansprüche 1 oder 2, **dadurch gekennzeichnet, dass**:
- die Befestigungszunge (466) ein Band ist, das sich in einer axialen Ebene erstreckt;
- die Befestigungslasche (52) ein Band ist, das sich in einer Ebene parallel zu der axialen Ebene erstreckt;
- die Befestigungszunge (466) und die Befestigungslasche (52) Ebene auf Ebene benachbart sind.

4. Scheibenbremse nach Anspruch 3, **dadurch gekennzeichnet, dass**:
- die komplementären Verbindungsmittel wenigstens einen Finger (72) mit transversaler Orientierung orthogonal zur axialen Ebene umfassen, der durch die Befestigungslasche (52) getragen ist und der in einem Einschnitt (468) aufgenommen ist, der in der Befestigungszunge (466) gebildet ist.

5. Scheibenbremse nach Anspruch 3, **dadurch gekennzeichnet, dass** der freie vordere Endabschnitt des Anschlussarms (B4) ein Band ist, das sich in einer axialen vertikalen Ebene orthogonal zur Ebene der Scheibe (12) erstreckt, und das die Befestigungslasche (52) bildet.

6. Scheibenbremse nach einem der Ansprüche 3 oder 4, **dadurch gekennzeichnet, dass** die Befestigungslasche (52) als eine Klemme gestaltet ist, in der die Befestigungszunge (466) aufgenommen ist.

7. Scheibenbremse nach Anspruch 6 in Kombination mit Anspruch 5, **dadurch gekennzeichnet, dass** die Klemme das Band und einen parallelen Streifen (68) umfasst, der den Finger (72) trägt.

8. Scheibenbremse nach Anspruch 1, **dadurch gekennzeichnet, dass** die Befestigungslasche (52) eine Lasche (212) zur Stabilisierung der elastischen Rückstellfeder (48) umfasst, die mit einem Bereich der Gleitführung (32) zusammenwirkt.

9. Scheibenbremse nach Anspruch 8, **dadurch gekennzeichnet, dass** die Stabilisierungslasche (52) sich transversal und horizontal ausgehend von einem Rand (208) der Befestigungslasche (52) mit axialer Orientierung erstreckt und mit einem Bereich eines horizontalen Flügels (425) der Gleitführung (32) zusammenwirkt.

10. Scheibenbremse nach Anspruch 9, **dadurch gekennzeichnet, dass** der horizontale Flügel (425) der Gleitführung (32) eine Stabilisierungszunge (470) umfasst, die sich axial nach hinten in der horizontalen Ebene dieses horizontalen Flügels (425) erstreckt, und dass die Stabilisierungslasche (52) in Anlage an einer oberen Fläche (472) der Stabilisierungszunge (470) ist.

11. Scheibenbremse nach einem der vorhergehenden Ansprüche, **dadurch gekennzeichnet, dass** die Befestigungslasche (52) der elastischen Rückstellfeder (48) eine Anschlaglasche (202) umfasst, die in Kontakt axial nach vorne mit einer gegenüberliegenden Anschlagfläche (474) der Gleitführung (32) ist.

12. Scheibenbremse nach Anspruch 11 in Kombination mit Anspruch 9, **dadurch gekennzeichnet, dass** die Anschlaglasche (202) sich ausgehend von dem Rand (208) der Befestigungslasche (52) mit axialer Orientierung erstreckt.

13. Scheibenbremse nach Anspruch 1, **dadurch gekennzeichnet, dass** der wenigstens eine Flügel (34) der Gleitführung (32), der die Befestigungszunge umfasst, der vertikale Bodenflügel (34) der Gleitführung ist.

14. Scheibenbremse (10) nach Anspruch 1, **dadurch gekennzeichnet, dass** die elastische Rückstellfeder (48) Mittel zur Kompensation eines Verschleißspiels (J2) des Reibbelags (24) des Bremsklotzes (18) umfasst, die sich plastisch verformen, wenn ein Weg des Bremsklotzes bis zu seiner aktiven Bremsposition größer ist als das bestimmte Funktionsspiel (J1).

15. Scheibenbremse (10) nach Anspruch 1, **dadurch gekennzeichnet, dass** die elastische Rückstellfeder (48) einstückig durch Schneiden und Formen eines Materialblatts realisiert ist.

16. Feder (48) zur elastischen axialen Rückstellung eines Bremsklotzes (18) einer Scheibenbremse (10) nach einem der vorhergehenden Ansprüche in Richtung einer inaktiven Position, wobei die elastische Rückstellfeder (48) umfasst:
- einen Bereich (50) zur Befestigung der elastischen Rückstellfeder (48) an einem festen Träger einer Scheibenbremse (14); und
- einen Anschlussarm (B4), der direkt oder indirekt mit dem Bremsklotz (18) verbunden ist;
**dadurch gekennzeichnet, dass** der Bereich (50) zur Befestigung der elastischen Rückstellfeder (48) an dem festen Träger (14) eine Befestigungslasche (52) umfasst, die sich nach vorne entlang einer axialen Richtung parallel zur Schieberichtung des Bremsklotzes (18) erstreckt, und die komplementäre Mittel zur Verbindung mittels Zusammenwirkung von komplementären Formen mit einer Komponente (32) umfasst, die an dem festen Träger (14) befestigt ist.

17. Feder nach Anspruch 16, **dadurch gekennzeichnet, dass** sie Mittel zur Kompensation eines Verschleißspiels (J2) eines Reibbelags (24) des Bremsklotzes (18) umfasst, die zwischen dem Befestigungsbereich und dem starren Arm (B4) eingefügt sind, und die sich plastisch verformen, wenn ein Weg des Bremsklotzes (18) entlang einer axialen Verlagerungsrichtung bis zu einer aktiven Bremsposition größer ist als ein bestimmtes Funktionsspiel (J1).

18. Feder nach Anspruch 16, **dadurch gekennzeichnet, dass** sie einstückig durch Schneiden und Formen eines Materialblatts realisiert ist.

19. Gleitführung (32) zur axialen Schiebeführung eines Bremsklotzes (18) einer Scheibenbremse (10), die an den Wänden einer komplementären Aufnahme (28) eines festen Trägers (14) der Scheibenbremse anliegt, und die einen Gleitteil (452) mit C-förmigem Querschnitt umfasst, umfassend einen unteren horizontalen Flügel (424), einen oberen horizontalen Flügel (425) sowie einen vertikalen Bodenflügel (34), der den unteren (424) und den oberen (425) Flügel miteinander verbindet, **dadurch gekennzeichnet, dass** wenigstens ein Flügel (34) der Gleitführung (32) eine Befestigungszunge (466) umfasst, die sich axial erstreckt, und die komplementäre Mittel zur Verbindung mittels Zusammenwirkung von komplementären Formen mit einer elastischen Rückstellfeder (48) des Bremsklotzes nach einem der Ansprüche 16 bis 18 umfasst.

20. Gleitführung nach Anspruch 19, **dadurch gekennzeichnet, dass** sie einstückig durch Schneiden und Formen eines Materialblatts realisiert ist.

21. Ersatzkit für eine Scheibenbremse eines Automobilfahrzeugs nach einem der Ansprüche 1 bis 15, **dadurch gekennzeichnet, dass** es wenigstens einen Bremsklotz (18) und zwei elastische Rückstellfedern (48) umfasst, die zu dem Bremsklotz (18) gepaart sind, von denen jede nach einem der Ansprüche 16 bis 19 realisiert ist.

22. Ersatzkit nach Anspruch 21, **dadurch gekennzeichnet, dass** es ferner zwei Federn (100) zur Montage des Bremsklotzes in der Scheibenbremse umfasst.

## Claims

1. A disc brake (10) for an automotive vehicle which includes:
- a brake disc (12) which extends in a plane transverse to an axially oriented axis (A) of rotation of the disc;
- a fixed support (14) including at least two opposite arms (27) having a generally vertical orientation (V) each including a C-shaped cross-section axial housing (28) horizontally opening towards the opposite arm (27) and which is delimited by an upper face (33) and a lower face (31) with a generally horizontal orientation;
- for each arm (14) of the fixed support (14), a rail (32) which closely fits to the walls of the housing (28), which is attached to the fixed support and which includes at least one C-shaped cross-section sliding axial upper part (452) which is received and locked in the associated housing (28), this upper part (452) including an horizontal lower wing (424), an horizontal upper wing (425), and a bottom vertical wing (34) which connects both lower (424) and upper (425) wings together
- at least one brake pad (18) including two mounting opposite lateral lugs (26) each of which is received in an associated housing (28) of an associated arm (14) with a said rail (32) interposed therebetween;
wherein said at least one brake pad (18) includes a vertical transverse plate (19) which carries a friction lining (24) a friction transverse face (25) of which cooperates with an associated braking track (22) of the disc (12), the brake pad (18) being axially slidably mounted in the fixed support (14) between an active front position in which said friction face (25) bears against the associated braking track (22) of the disc (12), and an inactive rear position in which said friction face (25) is axially spaced apart from said associated braking track of the disc, by a determined operating play (J1);
- and at least one spring (48) for elastically returning the brake pad (18) to its inactive position including at least one portion (50) for attaching the elastic return spring (48) to the fixed support (14), and including a rigid connection branch (B4), with an axial orientation parallel to the sliding direction of the brake pad, and which is connected to the brake pad (18),
**characterised in that**:
- the portion (50) for attaching the elastic return spring (48) to the fixed support (14) includes an attachment tab which forwardly extends along an axial direction parallel to the sliding direction of the brake pad (18);
- at least one wing (34) of the rail (32) associated with this spring includes an attachment tongue (466) which extends axially rearwardly;
- the attachment tab (52) and the attachment tongue (466) include complementary cooperation connection means having complementary shapes.

2. The disc brake according to claim 1 or 2, **characterised in that** the complementary cooperation connection means having complementary shapes of the attachment tongue (466) and the attachment tab (52) cooperate by elastic socketing when assembled.

3. The disc brake according to one of claims 1, **characterised in that**:
- the attachment tongue (466) is a strip which extends in an axial plane;
- the attachment tab (52) is a strip which extends in a plane parallel to said axial plane;
- the attachment tongue (466) and the attachment tab (52) are adjacent, plane on plane.

4. The disc brake according to claim 3, **characterised in that**:
- said complementary connection means include at least one finger (72) with a transverse orientation orthogonal to said axial plane which is carried by the attachment tab (52) and which is received in a notch (468) formed in the attachment tongue (466).

5. The disc brake according to claim 3, **characterised in that** the front free end segment of the connection branch (B4) is a strip which extends in a vertical axial plane orthogonal to the plane of the disc (12) and which makes up said attachment tab (52).

6. The disc brake according to one of claims 3 or 4, **characterised in that** the attachment tab (52) is shaped as a clamp in which the attachment tongue (466) is received.

7. The disc brake according to claim 6 in combination with claim 5, **characterised in that** said clamp includes said strip and a parallel blade (68) which carries said finger (72).

8. The disc brake according to claim 1, **characterised in that** the attachment tab (52) includes a tab (212) for stabilizing the elastic return spring (48) which cooperates with a portion of said rail (32).

9. The disc brake according to claim 8, **characterised in that** said stabilizing tab (52) extends transversally and horizontally from an axially oriented edge (208) of the attachment tab (52) and cooperates with a portion of an horizontal wing (425) of the rail (32).

10. The disc brake according to claim 9, **characterised in that** said one horizontal wing (425) of the rail (32) includes a stabilizing tongue (470) which extends axially rearwardly in the horizontal plane of this horizontal wing (425), and **in that** the stabilizing tab (52) is bearing against an upper face (472) of the stabilizing tongue (470).

11. A disc brake according to any preceding claims, **characterised in that** the attachment tab (52) of the elastic return spring (48) includes an abutment tab (202) which is in contact, axially forwardly, with an opposite abutment face (474) of the rail (32).

12. The disc brake according to claim 11 taken in combination with claim 9, **characterised in that** said abutment tab (202) extends from said axially oriented edge (208) of the attachment tab (52).

13. The disc brake according to claim 1, **characterised in that** said at least one wing (34) of the rail (32) which includes the attachment tongue is the bottom vertical wing (34) of the rail.

14. The disc brake (10) according to claim 1, **characterised in that** the elastic return spring (48) includes means for taking up a wear play (J2) of the friction lining (24) of the brake pad (18), which are plastically deformed when a stroke of the brake pad up to its active braking position is higher than said determined operating play (J1).

15. The disc brake (10) according to claim 1, **characterised in that** the elastic return spring (48) is made as a single piece by cutting and forming a material sheet.

16. A spring (48) for elastically axially returning a brake pad (18), of a disc brake (10) according to any preceding claim, to an inactive position, wherein the elastic return spring (48) includes:
- a portion (50) for attaching the elastic return spring (48) to a fixed support of a disc brake (14); and
- a connection branch (B4) which is intended to be directly or indirectly connected to the brake pad (18);
**characterised in that** the portion (50) for attaching the elastic return spring (48) to the fixed support (14) includes an attachment tab (52) which forwardly extends along an axial direction parallel to the sliding direction of the brake pad (18), and which includes complementary connection means, intended to cooperate by complementary shapes, with a component (32) attached to the fixed support (14).

17. The spring according to claim 16, **characterised in that** it includes means for taking up a wear play (J2) of a friction lining (24) of the brake pad (18), which are interposed between said attachment portion and said rigid branch (B4), and which are plastically deformed when a stroke of the brake pad (18), along an axial direction of movement to an active braking position, is higher than a determined operating play (J1).

18. The spring according to claim 16, **characterised in that** it is made as a single piece by cutting and forming a material sheet.

19. A rail (32) intended to axially slidingly guide a brake pad (18) of a disc brake (10) which closely fits to the walls of a housing (28) complementary of a fixed support (14) of the disc brake, and which includes a C-shaped cross-section sliding part (452) including an horizontal lower wing (424), an horizontal upper wing (425), and a bottom vertical wing (34) which connects both lower (424) and upper (425) wings together, **characterised in that** at least one wing (34) of the rail (32) includes an attachment tongue (466) which extends axially and which includes complementary connection means intended to cooperate by complementary shapes, with a spring (48) for elastically returning the brake pad according to any of claims 16 to 18.

20. The rail according to claim 19, **characterised in that** it is made as a single piece by cutting and forming a material sheet.

21. A replacement kit for a disc brake for an automotive vehicle according to any of claims 1 to 15, **characterised in that** it includes at least one brake pad (18) and two elastic return springs (48) paired with said brake pad (18) each of which being made according to any of claims 16 to 19.

22. The replacement kit according to claim 21, **characterised in that** it further includes two springs (100) for mounting the brake pad in the disc brake.
